# EUROPÄISCHE PATENTANMELDUNG

(11) **EP 2 253 565 A2**
(43) Veröffentlichungstag der Anmeldung: **24.11.2010**
(21) Anmeldenummer: 10005163.0
(22) Anmeldetag: 18.05.2010
(51) Int. Cl.: B65G 57/18, B65G 57/24

(54) **Stapelvorrichtung zum Stapeln von Werkstücken aus Holz, Kunststoff oder dergleichen sowie Verfahren hierfür**

(30) Priorität: 18.05.2009 DE 102009021801
(71) Anmelder: Reinhardt, Christof, 78628 Rottweil-Neukirch (DE)
(72) Erfinder: Reinhardt, Franz, 78628 Rottweil-Neukirch (DE)
(74) Vertreter: Patentanwälte Westphal, Mussgnug & Partner

(57) **Zusammenfassung**

Die Erfindung betrifft eine Stapelvorrichtung zum Stapeln von Werkstücken aus Holz, Kunststoff oder dergleichen sowie ein Verfahren hierfür.

Die Stapelvorrichtung 1 weist eine Fördereinrichtung 20, einen Hubtisch 40, ein erstes Quertransportelement 12 zum Bewegen des Werkstücks von der Fördereinrichtung 20 auf den Hubtisch 40, eine Ablageeinrichtung 60 sowie ein zweites Quertransportelement 14 zum Bewegen des Werkstücks 10 von dem Hubtisch 40 auf die Ablageeinrichtung 60. Der Hubtisch 40 und die Ablageeinrichtung 60 sind höhenverstellbar und können jeweils mindestens ein Werkstück 10 oder ganze Lagen von Werkstücken 10 aufnehmen. Mittels der Ablageeinrichtung 60 sind die Werkstücke 10 lagenweise auf einem Untergrund 100 absetzbar.

Das Verfahren weist aufeinander folgend die Verfahrensschritte
a. erstes Bewegen eines der Werkstücke 10 oder eines Pakets bestehend aus mehreren Werkstücken 10 mittels der Fördereinrichtung 20 auf einer Förderhöhe Z in einer Transportrichtung t,
b. stoppen der Fördereinrichtung 20 sobald das Werkstück 10 eine Abnahmeposition für ein Abschieben auf den Hubtisch 40 erreicht hat,
c. erstes Abschieben des Werkstücks 10 von der Fördereinrichtung 20 auf den Hubtisch 40,
d. heben des Hubtisches auf eine Übergabehöhe Z+H₁,
e. zweites Abschieben des Werkstückes auf die Ablageeinrichtung 60,
f. senken der Ablageeinrichtung 60 und
g. ablegen einer Lage der Werkstücke 10 auf dem Untergrund 100 mittels der Ablageeinrichtung 60 auf.

## Beschreibung

Die Erfindung betrifft eine Stapelvorrichtung zum Stapeln von Werkstücken aus Holz, Kunststoff oder dergleichen sowie ein Verfahren hierfür.

Solche Stapelvorrichtungen werden insbesondere in Holz- oder Kunststoffverarbeitungsbetrieben eingesetzt, um Werkstücke nach einer Bearbeitung, beispielsweise Sägen, Kappen, Hobeln oder Schleifen, in Stapeln zu sammeln. Diese Stapel sind beispielsweise nach einer weiteren Verpackung auf Paletten vertiebsfertig transportierbar.

Bekannte Stapelvorrichtungen arbeiten in vertikaler Richtung gesehen auf einem hohen Niveau bezogen auf eine Stapeloberkante des durch die Stapelvorrichtung zu bildenden Stapels. Normale Arbeitsniveaus vorgelagerter Produktionsmaschinen liegen jedoch üblicherweise relativ weit unterhalb der Stapeloberkante. Eine Anpassung der Arbeitsniveaus der vorgelagerten Produktionsmaschinen an bekannte Stapelvorrichtungen wird oftmals über Steigstrecken oder durch Anheben der gesamten Produktionsmaschine auf das Arbeitsniveau der Stapelvorrichtung erreicht. Alternativ wird der Stapel in eine Grube abgesenkt. Solche Lösungen sind teuer und teilweise nur mit unverhältnismäßig hohem Aufwand realisierbar. Vor allem die Steigstrecken benötigen verhältnismäßig viel Platz.

Bei bekannten Stapelvorrichtungen ist außerdem das Stapeln von Werkstückpaketen nicht befriedigend gelöst. Zwischen den vorgelagerten Produktionsmaschinen und bekannten Stapelvorrichtungen müssen Werkstücke oftmals aufwändig vereinzelt werden. Das der Erfindung zugrunde liegende Problem besteht darin, eine kompakte Stapelvorrichtung bereitzustellen, die Werkstücke stapelt, wie beispielsweise Bretter oder Kanthölzer aus Holz, Kunststoffen oder dergleichen, die aus einer vorgelagerten Produktionsmaschine einzeln oder paketweise auf einem niedrigen Arbeitsniveau anfallen. Das Stapeln soll auf Ablagehölzern oder auf Paletten möglichst ebenerdig erfolgen. Dabei soll eine Abnahme der Werkstücke von den vorgelagerten Produktionsmaschinen möglichst ohne längere Unterbrechungen gewährleistet sein.

Das Problem ist erfindungsgemäß gelöst durch eine Stapelvorrichtung gemäß Anspruch 1 und ein Verfahren gemäß Anspruch 9.

Vorteilhafte Ausführungsformen sind in den Unteransprüchen angegeben.

Die Stapelvorrichtung zum Stapeln von Werkstücken aus Holz, Kunststoff oder dergleichen umfasst eine Fördereinrichtung, einen Hubtisch, eine Ablageeinrichtung sowie zwei Quertransportelemente.

Die Fördereinrichtung ist, in vertikaler Richtung gesehen, auf einer Förderhöhe angeordnet. Mittels der Fördereinrichtung ist mindestens eines der Werkstücke oder mindestens ein Paket bestehend aus mehreren der Werkstücke in einer vorzugsweise horizontalen Transportrichtung bewegbar.

Der Hubtisch ist, bevorzugt in einer im Wesentlichen vertikalen Richtung, mindestens um eine Hubhöhe zwischen einer Abnahmeposition mit einem Bezug zu der Fördereinrichtung und einer Abgabeposition mit einem weiteren Bezug zu der Ablageeinrichtung höhenverstellbar angeordnet.

Mittels eines ersten Quertransportelements ist in der Abnahmeposition mindestens das Werkstück in einer ersten Querrichtung quer zur Transportrichtung von der Fördereinrichtung auf den Hubtisch bewegbar. Mittels eines zweiten Quertransportelements ist in der Abgabeposition mindestens das Werkstück in einer dritten Querrichtung quer zur Transportrichtung von dem Hubtisch auf die Ablageeinrichtung bewegbar. Die Bewegung des Werkstücks mittels der Quertransportelemente erfolgt demnach im Wesentlichen in horizontalen Richtungen, bevorzugt in einer horizontalen Richtung.

Die Ablageeinrichtung ist in der Abgabeposition zur Aufnahme mehrerer der Werkstücke oder der Pakete auf einer Übergabehöhe angeordnet, wobei die Werkstücke oder Pakete in einer zweiten Querrichtung quer zur Transportrichtung nebeneinander zum Liegen kommen. Die Ablageeinrichtung ist um eine Ablagehöhe zwischen der Abgabeposition und einer Ablageposition höhenverstellbar, bevorzugt in einer im Wesentlichen vertikalen Richtung. In der Ablageposition sind die Werkstücke mittels der Ablageeinrichtung lagenweise auf einem Untergrund absetzbar. Nachdem eine erste Lage auf dem Untergrund abgesetzt ist, wird eine nächste Lage auf der ersten Lage abgelegt. Dies wiederholt sich entsprechend, bis der Stapel eine gewünschte Stapelhöhe erreicht hat.

Besonders vorteilhaft ist somit eine von den vorangehenden Produktionsmaschinen bezüglich des Produktionsflusses entkoppelnde Führung der Werkstücke durch die erfindungsgemäße Stapelvorrichtung vorgesehen, sodass eine kompakte Bauweise der Stapelvorrichtung resultiert. Vorteilhafterweise können die Werkstücke auf einer relativ niedrigen Ebene, der Förderhöhe, in die Stapelvorrichtung eingefahren werden, ohne dass die Stapelvorrichtung oder der Stapel in einer Mulde zu versenken ist. Die Förderhöhe ist somit entsprechend den vorgelagerten Produktionsmaschinen anpassbar, sodass keine Höhenverstellung der vorangehenden Produktionsmaschine erforderlich ist. Dies wird durch Höhenverstellungen innerhalb der Stapelvorrichtung erreicht.

In einer vorteilhaften Ausführungsform ist eine Zwischenablage auf der Übergabehöhe angeordnet. Die Zwischenablage nimmt mehrere Werkstücke in einer vierten Querrichtung quer zur Transportrichtung nebeneinander auf, bevorzugt in einer horizontalen Lage. Auch hier können statt nebeneinander geschobenen einzelnen Werkstücken Pakete bestehend aus mehreren übereinanderliegenden Werkstücken nebeneinander geschoben werden.

Die Zwischenablage ermöglicht eine Abnahme durch die Stapelvorrichtung von einer vorangehenden Maschine ohne wesentliche Unterbrechungen. Während der Zeit des Absenkens der Ablageeinrichtung kann die Zwischenablage mit Werkstücken gefüllt werden, bis die Ablagevorrichtung wieder auf Übergabehöhe angehoben ist. Dann können die Werkstücke, wie sie zwischenzeitlich auf bzw. in der Zwischenablage nebeneinander gesammelt sind, gemeinsam auf die Ablageeinrichtung abgeschoben werden.

In einer vorteilhaften Ausführungsform weist die Stapelvorrichtung eine Ausrichteinheit auf. Die Ausrichteinheit kann auf dem Hubtisch und/oder der Zwischenablage und/oder der Ablageeinrichtung angeordnet sein. Mittels der Ausrichteinheit sind nebeneinander und/oder übereinander liegende Werkstücke zu einander ausrichtbar, beispielsweise bezüglich ihrer Längen parallel zur Transportrichtung.

Somit können vorteilhafterweise Werkstücke stapelweise verarbeitet werden. Damit ist gemeint, dass kleine Stapel von beispielsweise fünf Brettern übereinander, als Pakete durch die Stapelvorrichtung bewegt werden, sodass sie am Ende lagenweise auf einen großen Gesamtstapel abgelegt werden können.

In vorteilhaften Ausführungsformen wird das Stapeln von solchen Paketen mehrerer Werkstücke dadurch unterstützt, dass das Anfahren der Quertransporteinrichtungen und das Heben und Senken mittels des Hubtisches und der Ablageeinrichtung mittels entsprechenden Steuerungen und Antrieben sanft erfolgt.

Weitere Einzelheiten der Erfindung ergeben sich aus den Unteransprüchen und der nachfolgenden Beschreibung einer in Figuren dargestellten Ausführungsform.

Das Verfahren zum Stapeln von Werkstücken aus Holz, Kunststoff oder dergleichen wird mit den aufeinanderfolgenden Verfahrensschritten a bis g und m anhand von Figuren ausführlich beschrieben.

Es zeigen:
- Figur 1: eine perspektivische Ansicht einer Stapelvorrichtung seitlich von vorne und oben,
- Figur 2: eine Frontansicht der Stapelvorrichtung mit einge- tragenen Schnitten A-A und B-B,
- Figur 3: eine Seitenansicht der Stapelvorrichtung als Schnitt A-A aus Figur 2,
- Figur 4: eine Seitenansicht der Stapelvorrichtung als Schnitt B-B aus Figur 2,
- Figur 5: eine Seitenansicht der Stapelvorrichtung in einer Abnahmeposition vor einem ersten Abschieben des Werkstücks von der Fördereinrichtung auf den Hub- tisch,
- Figur 6: eine Seitenansicht der Stapelvorrichtung in der Ab- nahmeposition nach dem ersten Abschieben des Werk- stücks von der Fördereinrichtung auf den Hubtisch,
- Figur 7: eine Seitenansicht der Stapelvorrichtung in einer Abgabeposition vor einem zweiten Abschieben des Werkstücks von dem Hubtisch auf eine Ablageeinrich- tung,
- Figur 8: eine Seitenansicht der Stapelvorrichtung in der Ab- gabeposition nach dem Abschieben des Werkstücks von dem Hubtisch auf eine Zwischenablage und
- Figur 9: eine Seitenansicht der Stapelvorrichtung in einer Abgabeposition nach einem Abschieben des Werkstückes von der Zwischenablage auf die Ablageeinrichtung.

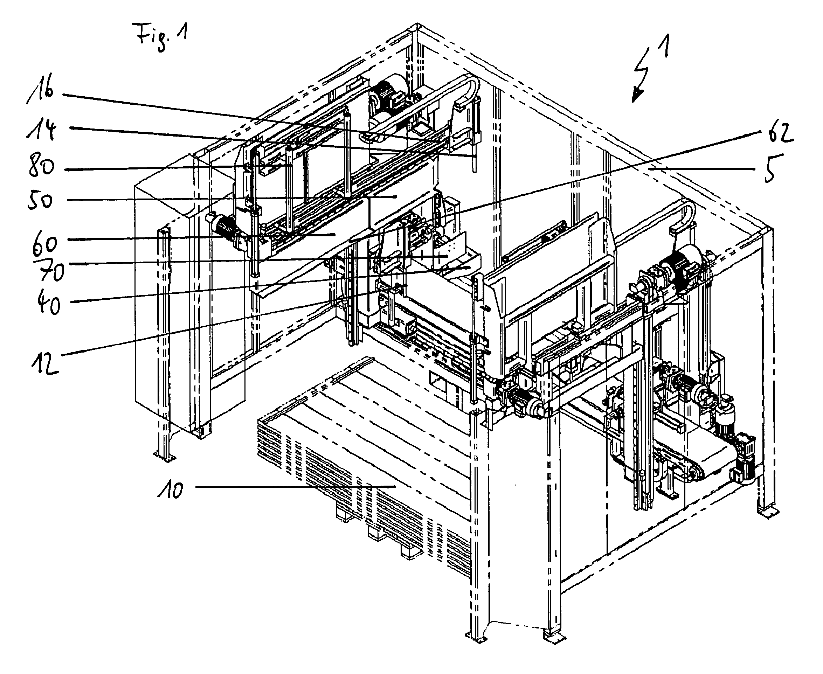

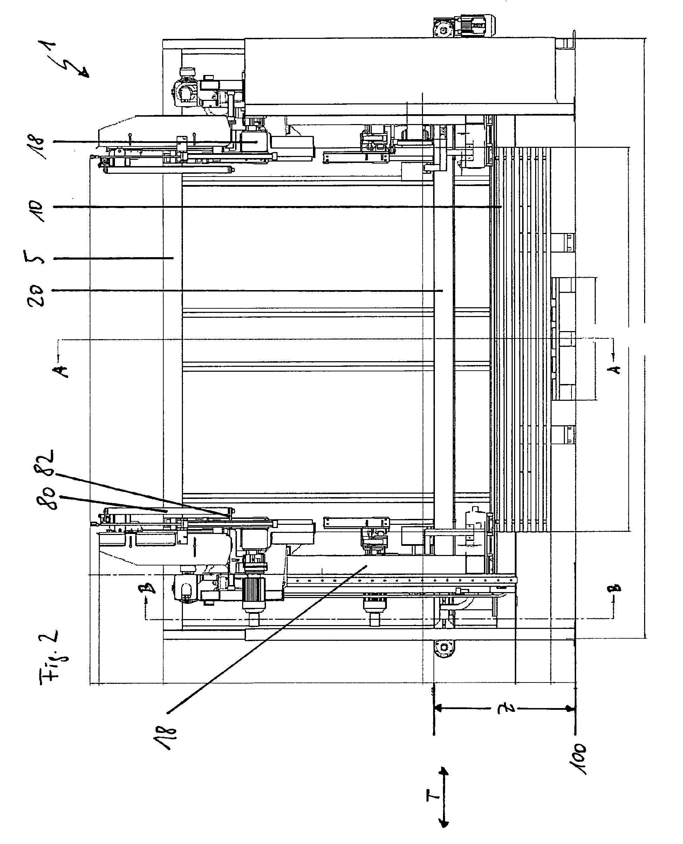

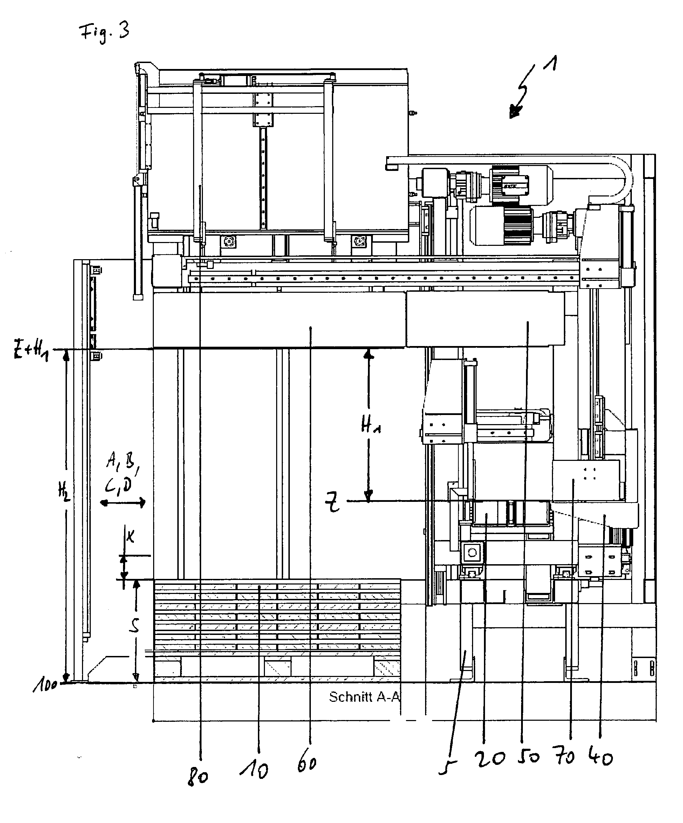

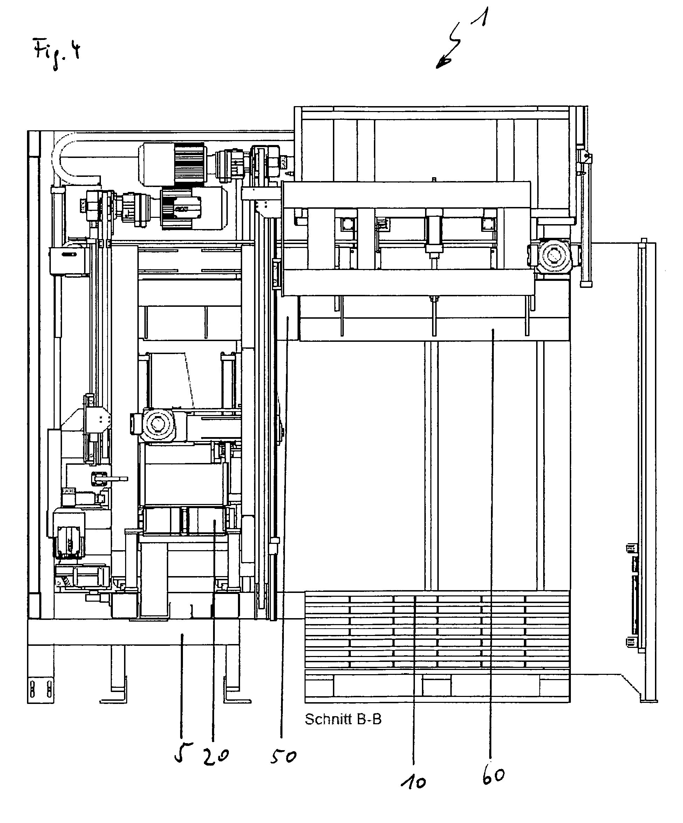

In den Figuren 1 bis 4 ist ein erstes Ausführungsbeispiel einer Stapelvorrichtung 1 dargestellt, bestehend aus einem Grundgestell 5 mit aufgebautem Förderband als Fördereinrichtung 20 und zwei verfahrbaren Ständern 18, an denen Aggregate für die Stapelung von Werkstücken 10 angebracht sind. Die beiden Ständer 18 sind manuell oder elektromotorisch auf eine Werkstücklänge einstellbar.

Die zu stapelnden Werkstücke 10 können gemäß einem Verfahrensschritt a einzeln oder in kleinen Paketen bestehend aus mehreren übereinander liegenden Werkstücken 10 über das Förderband in die Stapelvorrichtung 1 eingefahren werden. Das Förderband wird automatisch gemäß einem weiteren Verfahrensschritt b gestoppt, entweder über Lichtschranke oder durch eine SPS-Steuerung, sobald das Werkstück 10 die richtige Position für einen Abschiebevorgang erreicht hat.

Über zwei Querschiebestangen eines ersten Quertransportelements 12 wird das Werkstück 10 in einer Aufnahmeposition quer zur Transportrichtung des Förderbands z.B. nach hinten auf einen Hubtisch 40 abgeschoben. Dort befinden sich zwei Ausrichteinheiten 70, welche das Werkstück 10 in einer Längsrichtung ausrichten. Das Ausrichten kann erfolgen, solange das Werkstück 10 nach dem Abschieben in einer Ruheposition verharrt oder während das Werkstück 10 vom Hubtisch 40 in einem nächsten Schritt um eine Hubhöhe H₁ auf das maximale Stapelniveau auf einer Übergabehöhe Z+H₁ angehoben wird, sodass eine Abgabeposition erreicht ist.

Ein weiteres Quertransportelement 14 schiebt das Werkstück 10 in der Abgabeposition, jetzt in entgegengesetzter horizontaler Richtung, über eine kurze Zwischenablage 50 in Ablagearme 62 einer Ablageeinrichtung 60 ein. Je nach gewünschtem Stapelbild wird das Werkstück 10 parallel oder versetzt eingeschoben. Dieser Vorgang wird solange wiederholt, bis sich auf den Ablagearmen 62 eine komplette Lage mit Werkstücken 10 oder daraus bestehenden Paketen gebildet hat.

Zwischen den Lagen bestehend aus Werkstücken 10 werden Trennhölzer zur Beabstandung der übereinander abgelegten Lagen vorgesehen. Die Trennhölzer werden von einer Legeeinrichtung 80 mit Ablagefingern 82 auf der Lage abgelegt, sobald diese vollständig auf der Ablageeinrichtung 60 zusammengeschoben ist.

Anschließend senken sich die Ablagearme 62 maximal um eine Ablagehöhe H₂ von der Abgabeposition auf eine Ablageposition kurz oberhalb einem Niveau von Ablagehölzern auf einer Stapelhöhe S bzw. einer auf einem Untergrund 100 bereitgestellten Palette. Durch Ausschwenken der Ablagearme 62 um eine Achse E wird der Lage aus Werkstücken 10 die Auflagefläche entzogen und die Lage fällt auf die Ablagehölzer, bzw. auf die Palette, wobei eine resultierende Fallhöhe S+X möglichst gering gehalten wird. Danach fahren die Ablagearme 62 sofort wieder in die Abgabeposition zurück.

Kommen während des Senkens der Ablageeinrichtung 60 weitere Werkstücke 10 über das Förderband an, so werden die ankommenden Werkstücke 10 zwischenzeitlich in eine Zwischenablage 50 gefördert. Wenn die Ablagearme 62 wieder die Abgabeposition eingenommen haben, werden die in der Zwischenablage 50 bis dahin zwischengelagerten Werkstücke 10 mit einem Hub der zweiten Quertransportelemente 14 von der Zwischenablage 50 in die Ablagearme 62 eingeschoben.

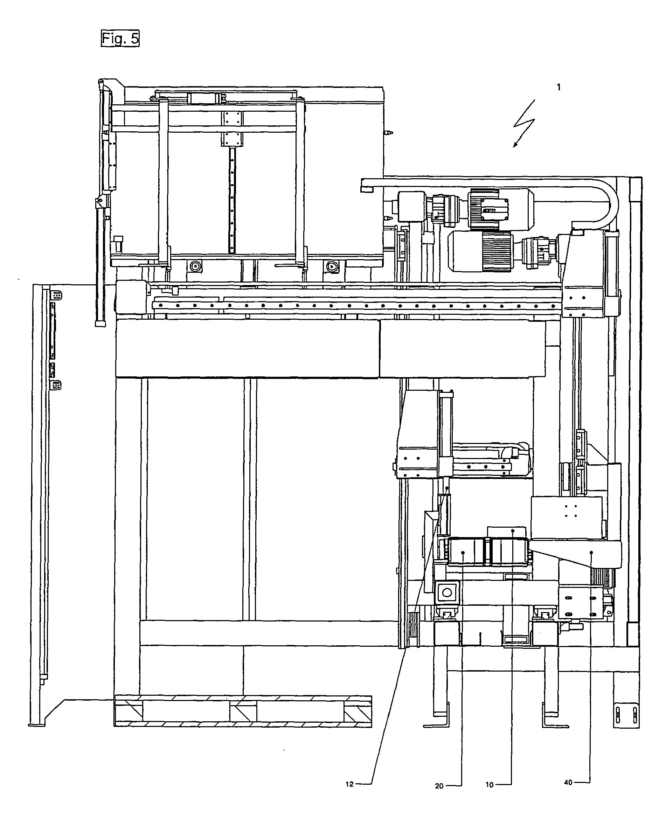

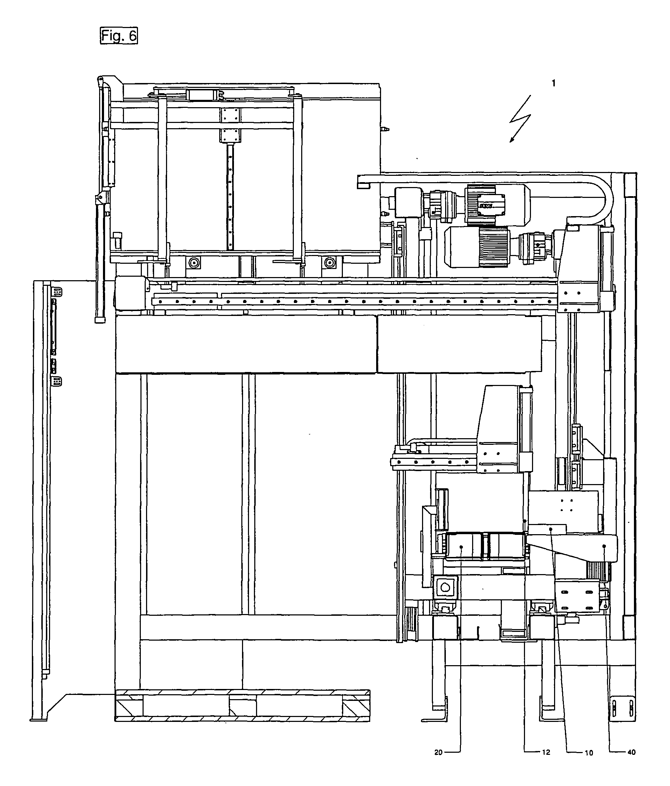

In den Figuren 5 und 6 ist die Stapelvorrichtung 1 in der Annahmeposition dargestellt. Das Werkstück 10 kann gemäß einem Verfahrensschritt c mittels der ersten Quertransportelemente 12 von der Fördereinrichtung 20 (Fig. 5) auf den Hubtisch 40 (Fig. 6) geschoben werden. Anschließend wird gemäß einem Verfahrensschritt d der Hubtisch 40 von der Förderhöhe Z auf die Übergabehöhe Z+H₁ angehoben.

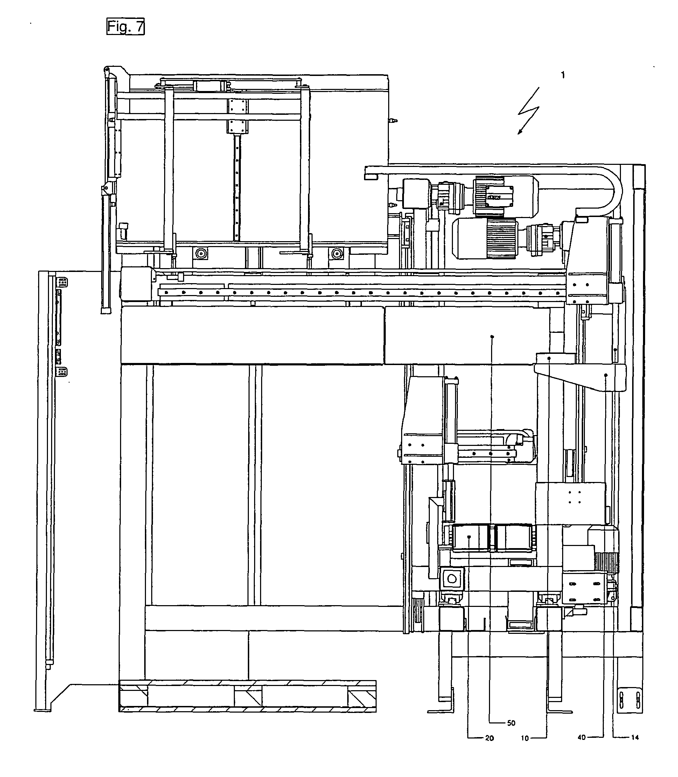

In den Figuren 7, 8 und 9 ist die Stapelvorrichtung 1 in der Abgabeposition dargestellt. Das Werkstück 10 kann gemäß den

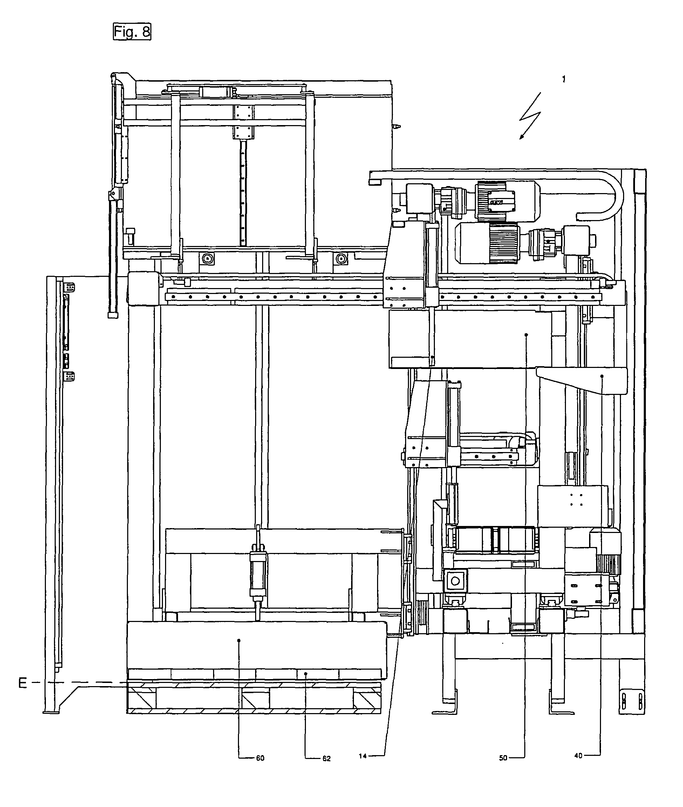

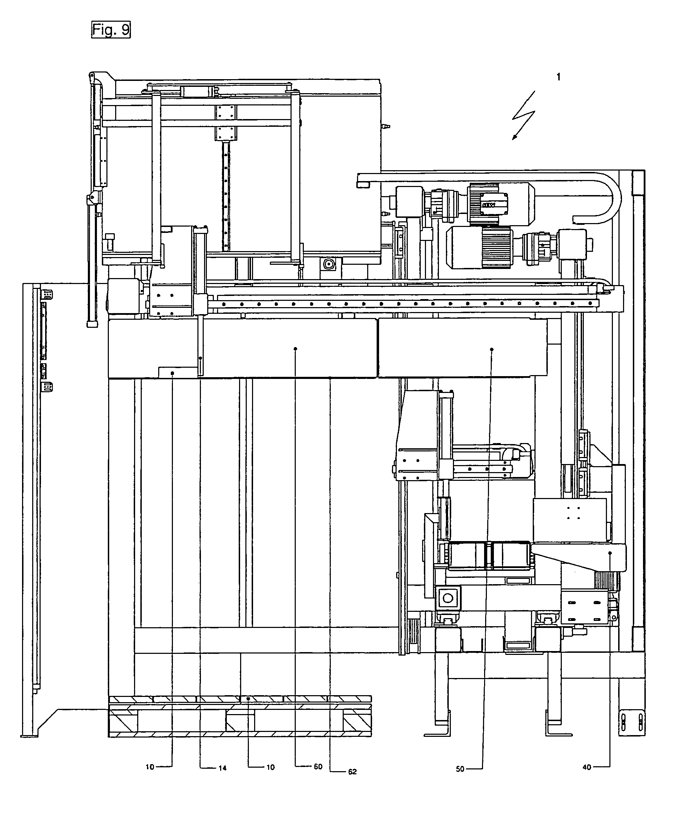

Verfahrensschritten m und e analog mittels der zweiten Quertransportelemente 14 von dem Hubtisch 40 (Fig.7) über die Zwischenablage (Fig. 8) in die Ablageeinrichtung 60 (Fig. 9) geschoben werden.

Anschließend wird gemäß einem Verfahrensschritt f die Ablageeinrichtung 60 von der Übergabehöhe Z+H₁ auf die Stapelhöhe S oder auf die Fallhöhe S+X oberhalb der Stapelhöhe S abgesenkt. Nach dem Senken f werden die in einer Lage befindlichen Werkstücke 10 gemäß einem Verfahrensschritt g mittels der Ablageeinrichtung 60 abgelegt, in dem die Ablagearme 62 seitlich ausschwenken.

### Bezugszeichenliste

- 1: Stapelvorrichtung
- 5: Grundgestell
- 10: Werkstück
- 12: erstes Quertransportelement
- 14: zweites Quertransportelement
- 16: Führungseinrichtung
- 18: Ständer
- 20: Fördereinrichtung
- 40: Hubtisch
- 50: Zwischenablage
- 60: Ablageeinrichtung
- 62: Ablagearme
- 70: Ausrichteinheit
- 80: Legeeinrichtung
- 82: Ablagefinger
- 100: Untergrund

- a: erstes Bewegen
- b: Stoppen
- c: erstes Abschieben
- d: Heben
- e: zweites Abschieben
- f: Senken
- g: Ablegen
- m: weiteres Abschieben

- Z: Förderhöhe
- T: Transportrichtung
- H₁: Hubhöhe
- H₂: Ablagehöhe
- A: erste Querrichtung

- B: zweite Querrichtung
- Z+H₁: Übergabhöhe
- C: dritte Querrichtung
- D: vierte Querrichtung
- E: Achse
- S: Stapelhöhe
- S+X: Fallhöhe

## Patentansprüche

1. Stapelvorrichtung (1) zum Stapeln von Werkstücken (10) aus Holz, Kunststoff oder dergleichen, mit
1.1 einer Fördereinrichtung (20), wobei die Fördereinrichtung (20) auf einer Förderhöhe (Z) angeordnet ist und wobei mittels der Fördereinrichtung (20) mindestens eines der Werkstücke (10) in einer Transportrichtung (T) bewegbar ist,
1.2 einem Hubtisch (40), wobei der Hubtisch (40) mindestens um eine Hubhöhe (H₁) zwischen einer Abnahmeposition mit einem Bezug zu der Fördereinrichtung (20) und einer Abgabeposition mit einem weiteren Bezug zu einer Ablageeinrichtung (60) höhenverstellbar angeordnet ist,
1.3 einem ersten Quertransportelement (12), mittels dessen in der Abnahmeposition mindestens das Werkstück (10) in einer ersten Querrichtung (A) quer zur Transportrichtung (T) von der Fördereinrichtung (20) auf den Hubtisch (40) bewegbar ist,
1.4 der Ablageeinrichtung (60), wobei die Ablageeinrichtung (60) zur Aufnahme mehrerer der Werkstücke (10), in einer zweiten Querrichtung (B) quer zur Transportrichtung (T) nebeneinander, auf einer Übergabehöhe (Z+H₁) angeordnet ist,
1.5 einem zweiten Quertransportelement (14), mittels dessen in der Abgabeposition mindestens das Werkstück (10) in einer dritten Querrichtung (C) quer zur Transportrichtung (T) von dem Hubtisch (40) auf die Ablageeinrichtung (60) bewegbar ist,
1.6 wobei die Ablageeinrichtung (60) um eine Ablagehöhe (H₂) zwischen der Abgabeposition und einer Ablageposition höhenverstellbar ist und wobei in der Ablageposition mittels der Ablageeinrichtung (60) die Werkstücke (10) lagenweise auf einem Untergrund (100) bzw. einer vorher auf dem Untergrund (100) abgelegten Lage absetzbar sind.

2. Stapelvorrichtung (1) gemäß Anspruch 1,
**dadurch gekennzeichnet, dass**
ein Grundgestell (5) zur Aufnahme der Fördereinrichtung (20), des Hubtisches (40), der Ablageeinrichtung (60) und Führungseinrichtungen (16) für die Quertransportelemente (12, 14) vorgesehen ist.

3. Stapelvorrichtung (1) gemäß einem der Ansprüche 1 oder 2, **dadurch gekennzeichnet, dass**
auf der Übergabehöhe (Z+H₁) eine Zwischenablage (50) zur Aufnahme mehrerer Werkstücke (10) in einer vierten Querrichtung (D) quer zur Transportrichtung (T) nebeneinander angeordnet ist, insbesondere zwischen dem Hubtisch (40) und der Ablageeinrichtung (60).

4. Stapelvorrichtung (1) nach einem der vorangehenden Ansprüche,
**dadurch gekennzeichnet, dass**
die Querrichtungen (A, B, C, D) quer zur Transportrichtung (T) miteinander übereinstimmen, insbesondere senkrecht zur Transportrichtung (T) verlaufen.

5. Stapelvorrichtung (1) nach einem der vorangehenden Ansprüche,
**dadurch gekennzeichnet, dass**
die Ablageeinrichtung (60) Ablagearme (62) aufweist, wobei die Ablagearme (62) zum lagenweisen Absetzen der Werkstücke (10) auf dem Untergrund (100) um jeweils eine Achse verschwenkbar sind, insbesondere um Achsen (E) quer zur Transportrichtung (T).

6. Stapelvorrichtung (1) nach einem der vorangehenden Ansprüche,
**dadurch gekennzeichnet, dass**
der Hubtisch (40) und / oder die Zwischenablage (50) und
/ oder die Ablageeinrichtung (60) an mindestens zwei in Transportrichtung (T) verfahrbaren Ständern (18) angeordnet ist, wobei die Ständer (18) durch entsprechendes Verfahren manuell oder elektromotorisch auf eine Länge (L) der Werkstücke (10) einstellbar sind.

7. Stapelvorrichtung (1) nach einem der vorangehenden Ansprüche,
**dadurch gekennzeichnet, dass**
der Hubtisch (40) und / oder die Zwischenablage (50) und
/ oder die Ablageeinrichtung (60) mindestens eine Ausrichteinheit (70) aufweist, mittels derer nebeneinander und / oder übereinander liegende Werkstücke (10) ausrichtbar sind, insbesondere bezüglich ihrer Längen parallel zur Transportrichtung (T).

8. Stapelvorrichtung (1) nach einem der vorangehenden Ansprüche,
**gekennzeichnet, durch**
eine Legeeinrichtung (80) zum Legen von Leisten, wobei die Leisten insbesondere über Magazine oder Querförderer auf ein Paar Ablagefinger (82) aufgelegt werden.

9. Verfahren zum Stapeln von Werkstücken (10) aus Holz, Kunststoff oder dergleichen,
aufweisend die aufeinander folgenden Verfahrensschritte
a. erstes Bewegen eines der Werkstücke (10) oder eines Pakets bestehend aus mehreren Werkstücken (10) mittels einer Fördereinrichtung (20) auf einer Förderhöhe (Z) in einer Transportrichtung (T),
b. Stoppen der Fördereinrichtung (20), sobald das Werkstück (10) eine Abnahmeposition für ein Abschieben auf einen Hubtisch (40) erreicht hat,
c. erstes Abschieben des Werkstücks (10) von der Fördereinrichtung (20) auf den Hubtisch (40),
d. Heben des Hubtisches (40) von der Förderhöhe (Z) auf eine Übergabehöhe (Z+H₁),
e. zweites Abschieben des Werkstücks (10) quer zur Transportrichtung (T) von dem Hubtisch (40) auf eine Ablageeinrichtung (60),
f. Senken der Ablageeinrichtung (60) von der Übergabehöhe (Z+H₁) auf eine Stapelhöhe (S) oder auf eine Fallhöhe (S+X) oberhalb der Stapelhöhe (S) und
g. Ablegen einer Lage der Werkstücke (10) oder der Pakete auf einem Untergrund (100) mittels der Ablageeinrichtung (60) .

10. Verfahren nach Anspruch 9,
**gekennzeichnet durch** einen weiteren Verfahrensschritt m. weiteres Abschieben des Werkstücks (10) von dem Hubtisch (40) auf eine Zwischenablage (50),
wobei der Verfahrensschritt (m) auf den Verfahrensschritt (d) folgt und anschließend an den Verfahrensschritt (m) analog zum Verfahrensschritt (e) ein Abschieben des Werkstücks (10) von der Zwischenablage (50) auf die Ablageeinrichtung (60) folgt.
